**Europäisches Patentamt**

**European Patent Office**

**Office européen des brevets**

(19)

(11) Numéro de publication: **0 165 878**

**A1**

(12)

# DEMANDE DE BREVET EUROPEEN

(21) Numéro de dépôt: **85420069.8**

(22) Date de dépôt: **15.04.85**

(51) Int. Cl.⁴: **B 32 B 27/06**
**B 32 B 27/12, B 32 B 27/36**
**B 32 B 33/00**

(30) Priorité: **24.04.84 FR 8406619**

(43) Date de publication de la demande:
**27.12.85 Bulletin 85/52**

(84) Etats contractants désignés:
**BE CH DE FR GB IT LI NL SE**

(71) Demandeur: **RHONE-POULENC FILMS**
**25, quai Paul Doumer**
**F-92408 Courbevoie(FR)**

(72) Inventeur: **Grosjean, Pierre**
**14, rue Alexandre Berthier**
**F-69110 Sainte-Foy-Les-Lyon(FR)**

(74) Mandataire: **Chichery, Guy et al,**
**RHONE-POULENC RECHERCHES Service Brevets Chimie**
**et Polymères Centre de Recherches de Saint-Fons B.P. 62**
**F-69192 St-Fons Cédex(FR)**

(54) Films composites métallisés utilisables comme écrans thermiques.

(57) Les films selon l'invention sont constitués par un film métallisé, la face métallisée étant revêtue d'un vernis protecteur, la face non métallisée étant rendue solidaire d'un renfort souple par l'intermédiaire d'un film mince et souple solidaire de la face non métallisée du film.

Figure 1

## FILMS COMPOSITES METALLISES UTILISABLES COMME ECRANS THERMIQUES

La présente invention concerne des films composites métallisés souples utilisables notamment à titre d'écran thermique.

Dans la recherche d'économie d'énergie, il est maintenant classique de mettre en oeuvre des écrans thermiques à base de films métallisés. Grâce à leurs propriétés réflectives en rayonnement infrarouge, ces surfaces sont en effet plus efficaces que les matériaux absorbants, eux-mêmes mieux placés que les produits transparents. Ces écrans se développent en particulier en habitat, et dans la maîtrise des déperditions thermiques nocturnes des serres maraîchères ou horticoles.

Bien que d'autres solutions soient proposées, les articles recouverts d'une mince couche d'aluminium par évaporation sous vide sont les plus accessibles industriellement et les plus économiques. Il a donc déjà été proposé de nombreux articles aluminisés pour écrans thermiques. Mais outre les qualités liées à la bonne protection de la couche d'aluminium, l'écran lui-même doit cependant présenter les autres caractéristiques suivantes :

- Légèreté Dans les emplois agricoles, il s'agit en effet d'écrans mobiles, mis en place pour la nuit. Il faut pouvoir les mouvoir et les supporter sur de grandes surfaces sans difficultés.

- Résistance à la déchirure L'écran doit pouvoir résister dans des conditions d'usage agricole normales : accrochages éventuels, contacts, frottements, chocs contre des outils de culture ...

- Repliage aisé En position jour, un écran doit pouvoir être refermé sous un volume faible, pour occuper sous serre un volume minimum. Il ne doit pas occulter la lumière, facteur primordial de culture.

- Résistance à l'humidité, soleil etc ...

- Coût peu élevé

     L'utilisateur voudra avoir un amortissement rapide.

Il est connu que les films polyester sont des supports de

2                              0165878

métallisation privilégiés, notamment pour l'aluminisation :

- Excellentes propriétés mécaniques, mêmes sous des épaisseurs très faibles.
- Grande facilité de métallisation : résistance thermique élevée, très bonne régularité d'épaisseur du film.
- Bonne adhésion de la micro-couche d'aluminium.
- Surface très plane, menant à des surfaces réflectives très efficaces (plan, miroir).

Mais d'autres films présentent ausi des possibilités intéressantes à la métallisation : films PVC, polypropylène etc ... Tous ces matériaux présentent cependant des inconvénients importants dans un emploi agricole, notamment un très mauvais comportement des films les plus fins à la déchirure amorcée.

Il a donc été proposé d'associer des films métallisés à des matériaux de renfort. Ainsi le complexage par des films polyéthylène simples ou alvéolaires d'au moins 40 microns d'épaisseur est connu : films ECCOTHERM.

Dans d'autres solutions, le film métallisé est renforcé par des réseaux textiles incorporés par couture, tricotage direct etc ... ; le film métallisé est souvent dans ce cas presque segmenté par les lignes de points (écran LS11 de SVENSSON). Il est connu aussi de le supporter totalement par un écran textile plus ou moins complexe, conçu en lui-même pour apporter des propriétés mécaniques suffisantes (cf. demande de brevet européen n° 0029173 du 5.11.80 de Ludwig SVENSSON).

Il est dommage, dans la plupart de ces solutions, de ne pas tirer parti des propriétés intrinsèques des films métallisés : légèreté, résistance mécanique etc ...

L'objet de la présente invention est alors constitué par un nouveau type de films composites métallisés, utilisables en écrans thermiques d'habitat ou agricole, surmontant les difficultés exposées ci-dessus.

Plus précisément, la présente invention a pour objet des films composites métallisés, utilisables notamment comme écrans thermiques et constitués par au moins un film métallisé (A), la face métallisée étant revêtue d'un vernis protecteur, la face non métallisée du film (A) étant rendue à la fois solidaire d'un renfort souple (B) destiné à améliorer le comportement du matériau composite à la déchirure et d'un film mince et souple (C). Ce dernier étant également solidaire du renfort souple (B).

Il est essentiel dans l'invention que le film A soit disposé avec sa face métallisée revêtue de son enduit protecteur placée extérieurement par rapport au renfort.

Le film A support de métal peut avoir une épaisseur comprise entre 50 et 5 microns. Plus particulièrement entre 8 et 25 microns. Ce film est de préférence un film polyester permettant d'atteindre au mieux les caractéristiques recherchées. Le revêtement métallique est préférentiellement en aluminium pour des raisons évidentes d'économie. La couche du métal déposé est d'au moins 50 mg/m$^2$ et est de préférence supérieure à 80 mg/m$^2$. Ceci correspond à une densité optique de préférence égale ou supérieure à 2.

On soulignera que les films, selon l'invention, présentent une grande résistance mécanique notamment une résistance élevée à la déchirure amorcée. Cette grande résistance provient, en particulier, du fait que les deux films sont à la fois solidaires de la grille "emprisonnée" entre eux, et également solidaires entre eux du fait que la grille n'est pas serrée (en dehors de la grille, les films sont directement solidaires entre eux). Ainsi la résistance de l'ensemble est la conséquence de la résistance élémentaire de chaque élément textile et de la résistance de l'assemblage entre les deux films.

Le renfort souple (B) est avantageusement un renfort textile choisi parmi des articles de poids inférieurs à 50 g/m$^2$. Tenu entre 2 films, il n'est pas essentiel que ce renfort soit en lui-même performant au niveau des propriétés mécaniques et de la cohésion etc ... Il est aussi envisagé de réaliser ce renfort B en continu au niveau de l'opération de complexage et de liaison du composite A + B + C. Sont donc utilisables, dans le cadre de la présente invention, des articles textiles variés pouvant être disposés de manière sensiblement planes tels que : tissus très ouverts, tricots légers, non tissés légers, filets, grilles souples, réseaux textiles etc ...

On peut préciser, dans le contexte précédent, que les mailles de la grille qui peuvent constituer élémentairement un parallélogramme

0165878

4

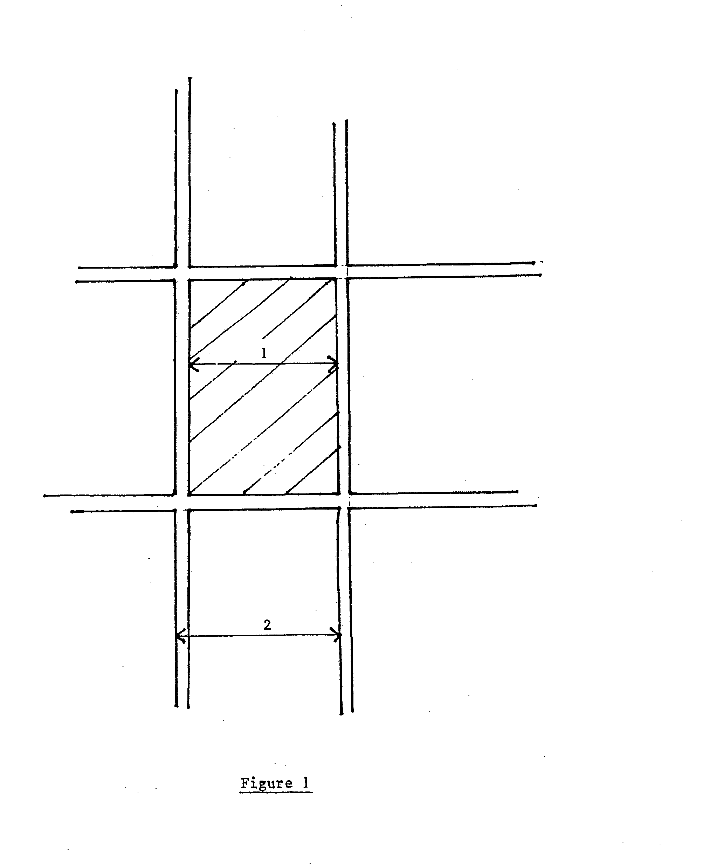

(carré, rectangle, losange ...) ont, selon une variante préférentielle de l'invention, des dimensions de maille moyenne telles que les longueurs 1 et 2 représentées sur la planche unique soient comprises dans les intervalles suivants :

1,5 ≤ dimension 1 ≤ 14,5 mm

2 ≤ dimension 2 ≤ 15 mm

Préférentiellement, ces dimensions sont comprises dans les intervalles suivants :

5 ≤ dimension 1 ≤ 12 mm

1,8 ≤ dimension 2 ≤ 13 mm

Les dimensions 1 et/ou 2 peuvent être prises soit parallèlement au fil de chaîne , soit parallèlement au fil de trame de la grille.

La surface de collage des films entre eux représentée par la partie hachurée de la planche unique est très grande par rapport à la surface totale. Cette surface de collage représente avantageusement au moins 50 % de la surface totale des films ; préférentiellement, cette surface représente au moins 80 % de la surface totale des films.

Ainsi, à titre illustratif, on peut citer une grille très lâche de poids 10 g/m$^2$ utilisée avec :

- 0,8 fils/cm dans chaque sens,
- en chaîne : chaque fil est composé de 2 fils polyester 167 dtex continu,
- en trame : chaque fil est composé de 1 fil polyester 280 dtex continu.

Cet article est peu stable en lui-même. Entre les films A et C, il convient cependant parfaitement pour un renfort antidéchirure.

Le film C est destiné avant tout à bloquer le renfort (B) contre (A). Il devra donc être léger, souple et bien adhérer à (A). Sa nature n'est pas en elle-même critique. Citons parmi les produits convenant bien, les films polyoléfines (polyéthylène d'épaisseur inférieure à 100 microns, films polypropylène biorientés), films polyester, films polyéthylène modifiés par exemple avec une certaine teneur en acétate de vinyle (EVA) etc ...

Un cas particulièrement intéressant de l'invention est obtenu quand on prend pour film C, à nouveau le film métallisé (A). On obtient alors une structure composite symétrique autour du renfort B, à 2 surfaces réflectives.

Comme on l'a déjà dit, la face métallique du film (A) est recouverte d'un vernis protecteur.

Le vernis de protection est choisi pour ses propriétés de protection de la couche métallique, sans diminuer les propriétés réflectives en infrarouge du métal. On mesure l'absorption globale instantanée ($\mathcal{E}_{IR}$ en %) d'un flux émis par un corps à température voisine de l'ambiante par l'appareil EL 520 - marque ELAN Informatique - licence CNRS - échantillon à 20°C - flux IR émis par photopile à 70°C.

La transmission étant nulle, la réflectivité en % dans l'infrarouge est donné par :

$$\rho_{IR} = 100 - \mathcal{E}_{IR}$$

Dans l'invention, le vernis est choisi pour donner $\rho_{IR} \geqslant 70$ % et préférentiellement $\rho_{IR} \geqslant 85$ %. La couche d'aluminium déposée est supérieure à 50 mg/m$^2$, et de préférence supérieure à 80 mg/m$^2$. Ceci correspond à une densité optique de préférence égale ou supérieure à 2.

Parmi les vernis utilisables notamment pour protéger l'aluminium on peut citer :

des résines polyester, Epikote, vinyliques ...

Il est essentiel dans ce domaine d'ajuster avec beaucoup de soins la composition de cet enduit au matériel d'enduction utilisé, et aux propriétés finales à obtenir.

Dans la mise en oeuvre d'écrans performants en économie d'énergie, une structure biréflective est intrinsèquement plus performante. En pratique, elle se révèle spécifiquement importante face aux possibilités de condensation d'humidité. Il est connu qu'un film d'eau très mince (buée) annule les propriétés réflectives en infrarouge et rend la surface absorbante. Dans un volume donné à profils thermique et hygrométrique, dissymétriques autour d'un écran, les condensations se produisent dans la majorité des cas sur une seule face.

Un écran biréflectif gardera donc en pratique toujours une face à efficacité élevée par sa réflectivité en infrarouge thermique. Un tel comportement justifie le supplément de coût dû à ce type de produit.

Dans les exemples suivants, nous avons donc caractérisé le comportement à la déchirure de divers films aluminisés :

- des films fins simples,

- des films fins, complexés par un 2ème film (ceci illustre le comportement de produits déjà connus),

- des films renforcés selon l'invention.

La déchirabilité des films a été mesurée en dynanométrie INSTRON selon 3 tests.

- <u>Test 1</u>

Résistance en début de déchirure (film entaillé en V ...)

   . distance entre mors : 50 mm

   . vitesse de traction : 20 mm/mn

   . largeur de l'éprouvette à la pointe : 13 mm

- <u>Test 2</u>

Résistance à la rupture sur film troué par pointe $\emptyset$ 3,5 m

   . distance entre mors : 100 mm

   . largeur d'éprouvette : 15 mm

- <u>Test 3</u>

Résistance à la déchirure amorcée

   . éprouvette largeur : 35 mm

   . entaille longueur : 120 mm

Exemples 1 et 2

| Résultats | tests en g | | |
|---|---|---|---|
| | 1 | 2 | 3 |
| **Films métallisés** | | | |
| Polypropylène 20 $\mu$ métallisé | 270 | 500 | 14 |
| Polyester 15 $\mu$ " | 350 | 1450 | 6 |
| **Films complexés** | | | |
| Polyester 15 $\mu$ + Polypropylène 20 $\mu$ | 500 | 3300 | 18 |
| Polyester 15 $\mu$ + Polyéthylène 50 $\mu$ | 780 | 5000 | 130 |
| Polyester 15 $\mu$ + Polyéthylène 75 $\mu$ | 770 | 3100 | 200 |
| **Films selon l'invention** | | | |
| ex 1 : Polyester 15 $\mu$ + Grille 8 g/m$^2$ + Polyéthylène 20 $\mu$ | 450 | 2500 | 400 |
| ex 2 : Polyester 15 $\mu$ + Grille 8 g/m$^2$ + Polyester 15 $\mu$ | 300 | 2550 | 470 |

La grille renforçante utilisée est constituée par une trame de fils continus polyester orthogonaux distant d'1 cm.

Les essais montrent que les films simplement complexés, sans grille, ont un comportement aux essais assez irrégulier. Ceci parait dépendre de la construction du complexe, du sens de l'entaille etc ... Ces films roulottent beaucoup, ce qui peut rendre leur manipulation difficile sur grande surface. De plus, il faut un film contrecollé relativement épais pour apporter des propriétés antidéchirure suffisantes.

Au total, seuls les éléments construits selon l'invention sont à la fois légers, résistants et performants d'un point de vue thermique. On relève que la structure biréflective a aussi un excellent comportement dans les divers tests.

L'obtention industrielle de telles structures composites fait appel à des moyens connus, notamment à des moyens de collage variés et accessibles. Il sera important, durant ces opérations, de ne pas endommager le vernis de protection de l'aluminium et de garder au complexe une bonne souplesse et légèreté.

Les films composites de l'invention ont été placés pendant plusieurs mois dans une serre cultivée. On a observé un excellent comportement d'utilisation et notamment une très bonne résistance aux usages journaliers associée à une très bonne stabilité des performances réflectives.

Exemple 3

Un film de 12 microns polyester aluminisé à densité optique 3 est enduit face aluminium et renforcé sur l'autre face par :
- une grille textile en fils polyesters, maille 12 mm/12 mm, fils polyester 167/30 dtex à 2 bouts
- un film (polyéthylènevinylacétate : EVA), calandré à chaud, 20 microns, sans colle.

Ce complexe de 48 g/m$^2$ possède les caractéristiques mécaniques suivantes :

| Dynamomètre | Résistance Kg/cm | Allongement rupture % |
|-------------|------------------|-----------------------|
| sens long | 1,9 | 68 |
| sens travers | 4,2 | 36 |

- Résistance à la déchirure amorcée
  entaille 12 mm - traction en long
  sens long : 3,3 kg
  sens large : 2,25 kg

Exemple 4

Un film complexe est formé de 2 films polyester 15 microns aluminisés, enduits, renforcé face interne par une grille souple polyester de maille 5 mm x 5 mm, de poids 26 g/m$^2$, le tout étant complexé selon des techniques connues. Le complexe symétrique biréflectif obtenu a les propriétés suivantes :

| Dynamomètre | Résistance Kg/cm | Allongement rupture % |
|-------------|------------------|-----------------------|
| sens long   | 4,5              | 50                    |
| sens travers | 2,3             | 55                    |

- Résistance à la déchirure amorcée
  (traction croisée)
  sens long    : 475 g
  sens travers : 300 g

Ce film se montre très résistant à l'usage en serre : tests en serre TUNNEL sur plusieurs mois.

Exemple 5

Un film 15 microns polyester est aluminisé sous vide. La couche métallique est protégée par enduit. On renforce sur l'autre face par :
- une grille souple polypropylène extrudée, de maille sensiblement 8 mm x 8 mm, de poids 25 g/m$^2$.
- un film polyéthylène 50 microns, avec colle intercalaire 3 g/m$^2$.

Le complexe obtenu présente pour l'emploi d'écran pour serre les propriétés suivantes :

| Dynamomètre | Résistance Kg/cm | Allongement rupture % |
|-------------|------------------|------------------------|
| sens long | 3,0 | 68 |
| sens travers | 3,2 | 67 |

- Résistance à la déchirure amorcée
  entaille 12 mm - traction en long
  sens long     :  4,8 kg
  sens travers :  4,9 kg
- Résistance à la déchirure amorcée
  (traction croisée)
  sens long     : 425 g
  sens travers : 565 g

## REVENDICATIONS

1 - Films composites métallisés, utilisables notamment comme écrans thermiques et constitués par au moins un film métallisé (A), la face métallisée étant revêtue d'un vernis protecteur, la face non métallisée du film (A) étant rendue à la fois solidaire d'un renfort souple (B) destiné à améliorer le comportement du matériau composite à la déchirure, et d'un film mince et souple (C), ce dernier étant également solidaire du renfort souple (B).

2 - Films selon la revendication 1, caractérisés en ce que le film (A) est un film aluminisé.

3 - Films selon l'une des revendications 1 à 2, caractérisés en ce que le film (A) est un film polyester métallisé.

4 - Films selon l'une des revendications 1 et 3, dans lesquels le renfort souple est un renfort textile.

5 - Films métallisés selon l'une des revendications 1 à 4, dans lesquels le film (C) est lui-même un film métallisé (A).

0165878

PLANCHE UNIQUE

Figure 1

Office européen
des brevets

RAPPORT DE RECHERCHE EUROPEENNE

**0165878**
Numero de la demande

EP  85 42 0069

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| Y | GB-A-2 104 446   (HOPWOOD KAY HOPWOOD LTD.) <br> * En entier * | 1-4 | B 32 B   27/06 <br> B 32 B   27/12 <br> B 32 B   27/36 <br> B 32 B   33/00 |
| A | | 5 | |
| Y | FR-A-2 508 969  (SOC. INT. DE REVETEMENTS DE SOL) <br> * Figures;  revendications  1,7; page  2,  lignes  4-12;  page  3, ligne 22 - page 4, ligne 2 * | 1-4 | |
| Y | CH-A-  522 502   (E. GAMPER) <br> * En entier * | 1-5 | |
| Y | FR-A-2 033 461   (VEROLME VACUUMTECHNIC AG) <br> * Figures, revendications * | 1-5 | DOMAINES TECHNIQUES RECHERCHES (Int. Cl.4) |
| A | FR-A-2 501 331  (C. AYMONNIER) <br> * Figures;  page  3,  ligne 12 - page 4, ligne 39 * | 1-4 | B 32 B |
| A | FR-A-1 485 591  (SOC. RHOVYL) <br> * En entier * | 1-5 | |
| A | DE-U-8 030 565  (J. TESMER) <br> * Figures; revendications 1-8 * | 1-5 | |

--- -/-

Le présent rapport de recherche a été établi pour toutes les revendications

| Lieu de la recherche | Date d'achèvement de la recherche | Examinateur |
|---|---|---|
| LA HAYE | 12-07-1985 | DE LA MORINERIE B.M. |

Office européen
des brevets

**RAPPORT DE RECHERCHE EUROPEENNE**

**0165878**
Numero de la deman

EP   85 42 006

| | **DOCUMENTS CONSIDERES COMME PERTINENTS** | | Page   2 |

| Catégorie | Citation du document avec indication, en cas de besoin, des parties pertinentes | Revendication concernée | CLASSEMENT DE LA DEMANDE (Int Cl.4) |
|---|---|---|---|
| A | US-A-2 189 409   (L.T. SIBLEY) <br> * En entier * | 1-5 | |
| | --- | | |
| A | US-A-3 730 752  (A.E. GUAJARDO GARZA) <br> *   Figures 1,2,4; revendication 1 * | 1-5 | |
| | ----- | | |
| | | | **DOMAINES TECHNIQUES RECHERCHES (Int. Cl.4)** |

Le présent rapport de recherche a été établi pour toutes les revendications

| Lieu de la recherche <br> LA HAYE | Date d'achèvement de la recherche <br> 12-07-1985 | Examinateur <br> DE LA MORINERIE B.M. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82